# EUROPÄISCHE PATENTSCHRIFT

(11) **EP 1 137 240 B1**
(45) Veröffentlichungstag und Bekanntmachung des Hinweises auf die Patenterteilung: **30.11.2005**
(21) Anmeldenummer: 01105725.4
(22) Anmeldetag: 08.03.2001
(51) Int. Cl.: H04M 1/725, H04Q 7/32, H04M 3/56

(54) **Funkgerät**
Radiotelephone
Radiotéléphone

(30) Priorität: 18.03.2000 DE 10013607
(43) Veröffentlichungstag der Anmeldung: 26.09.2001
(73) Patentinhaber: ROBERT BOSCH GMBH, 70442 Stuttgart (DE)
(72) Erfinder: Fischer, Ralf, 31162 Bad Salzdetfurth (DE); Reinecke, Joerg, 38173 Sickte (DE)

(56) Entgegenhaltungen:
- EP-A- 0 830 042
- EP-A- 0 849 965
- EP-A- 0 933 915
- US-A- 5 983 100

## Beschreibung

### Stand der Technik

Die Erfindung geht aus von einem Funkgerät nach der Gattung des Hauptanspruchs. Es sind allgemein Funkgeräte bekannt, die mit einer ersten Funkschnittstelle und mit einer zweiten Funkschnittstelle ausgestattet sind, wobei eine erste Kommunikationsverbindung über die erste Funkschnittstelle mit einem ersten Teilnehmer aufbaubar ist.

### Vorteile der Erfindung

Das erfindungsgemäße Funkgerät mit den kennzeichnenden Merkmalen des Hauptanspruchs hat demgegenüber den Vorteil, dass eine drahtlose interne Verbindung zwischen wenigstens zwei Funkgeräten ermöglicht wird, die ein Mithören eines externen Telefongesprächs und/oder ein Mitsprechen in einem externen Telefongespräch erlaubt. Die interne drahtlose Verbindung zum Mithören bzw. Mitsprechen verlangt keine Verbindungsentgelte und ist damit völlig kostenfrei. Es wird somit eine Konferenzschaltung ermöglicht, die es wenigstens einem weiteren Teilnehmer, der normalerweise von einer über ein Mobilfunknetz oder über das Festnetz geführten externen Verbindung ausgeschlossen wäre, an dieser Verbindung teilzunehmen. Dies ist insbesondere dann sinnvoll, wenn die Gesprächsteilnehmer örtlich voneinander getrennt sind, beispielsweise in verschiedenen Räumen lokalisiert sind.

Weiterhin ist von Vorteil, dass die erste und die zweite Kommunikationsverbindung zur Übertragung von Sprachdaten dient. Damit ist es möglich, die Erfindung für eine sehr wichtige Anwendung, nämlich die Übertragung von Sprachdaten, einzusetzen.

Weiterhin ist von Vorteil, dass die erste und die zweite Kommunikationsverbindung der Übertragung von Faxdaten, Bilddaten und/oder Steuerungsdaten dient. Damit ist es möglich, die Erfindung ebenfalls zur Übertragung von Daten beliebiger Art zu verwenden.

Weiterhin ist von Vorteil, dass die über die erste Funkschnittstelle stattfindende Kommunikation weiter reichweitig ist als die über die zweite Funkschnittstelle stattfindende Kommunikation. Damit wird ermöglicht, den Bedarf an längerreichweitiger Kommunikation mit externen Teilnehmern über die erste Funkschnittstelle und den Bedarf an kurzreichweitiger Kommunikation mit internen Teilnehmern über die zweite Funkschnittstelle zu decken, ohne dass durch den Betrieb der zweiten Funkschnittstelle unnötig viel Energie beansprucht wird, was zusätzlich zu einer längeren Lebensdauer der Stromversorgung zu einer kompakteren Bauform und einem kostengünstigeren Produkt führt.

Weiterhin ist von Vorteil, dass die erste Funkschnittstelle der Kommunikation mit einem Mobilfunknetz gemäß einem Standard zur Funkkommunikation dient. Dadurch ist das Funkgerät besser einsetzbar, insbesondere kann eine Kommunikation hergestellt werden mit Teilnehmern, die Funkgeräte verschiedener Hersteller benutzen.

Weiterhin ist von Vorteil, dass die erste Funkschnittstelle der Kommunikation gemäß dem DECT, GSM und/oder UMTS-Standard dient. Dadurch wird eine Kommunikation über die erste Funkschnittstelle beispielsweise in nahezu allen Ländern Europas ermöglicht.

Weiterhin ist von Vorteil, dass die zweite Funkschnittstelle der Kommunikation gemäß dem Bluetooth-Standard dient. Hierdurch wird gewährleistet, dass das Funkgerät mit Geräten anderer Hersteller, die ebenfalls nach dem Bluetooth-Standard betrieben werden können, kommunizieren kann.

Weiterhin ist von Vorteil, dass über die erste Kommunikationsverbindung übertragene Daten sowohl von allen Teilnehmern empfangbar als auch von allen Teilnehmern veränderbar sind. Hierdurch wird eine echte Konferenzschaltung zwischen den beteiligten Teilnehmern ermöglicht, die sich jedoch nicht nur auf den Austausch von Sprachdaten sondern ebenso auf den Austausch von Faxdaten, Bilddaten und/oder Steuerungsdaten bezieht.

### Zeichnung

Ein Ausführungsbeispiel der Erfindung ist in der Zeichnung dargestellt und in der nachfolgenden Beschreibung näher erläutert. Es zeigen
Figur 1 das erfindungsgemäße Funkgerät (d. h. erster Teilnehmer) mit einer aufgebauten ersten Verbindung zu einem zweiten Teilnehmer und einer aufgebauten zweiten Verbindung zu einem dritten Teilnehmer und
Figur 2 eine detailreichere Darstellung des erfindungsgemäßen Funkgerätes.

### Beschreibung des Ausführungsbeispiels

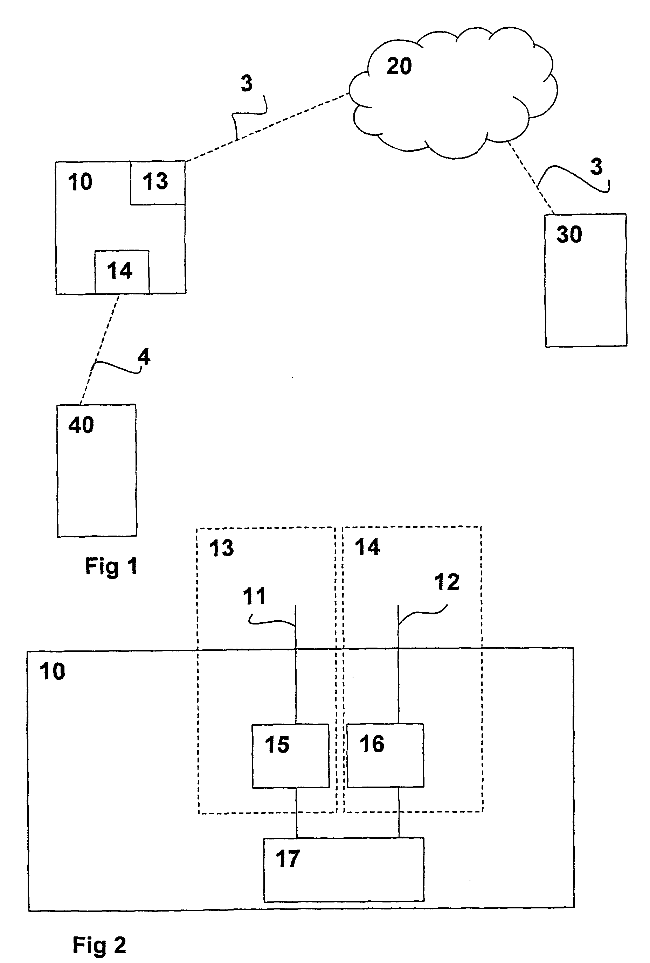

In Figur 1 ist ein erfindungsgemäßes Funkgeräte (d.h. erster Teilnehmer) 10 dargestellt, das über eine erste Funkschnittstelle 13 und eine erste Kommunikationsverbindung 3 mit einem zweiten Teilnehmer 30 verbunden ist. Die erste Kommunikationsverbindung 3 ist hierbei über ein Netz 20 geführt. Das Funkgerät 10 ist erfindungsgemäß insbesondere ein Mobiltelefon oder ein schnurloses Telefon. Der zweiten Teilnehmer 30 ist erfindungsgemäß entweder ebenfalls ein Mobiltelefon bzw. ein Schnurlostelefon, oder aber ein drahtgebundenes herkömmliches Telefon, bzw. eine Datenverarbeitungsanlage mit Telefonfunktionalität, beispielsweise Personal Computer mit Modem oder ISDN Anbindungsmöglichkeit. Die erste Kommunikationsverbindung 3 ist je nach Art des zweiten Teilnehmers 30 über das Netz 20 geführt, wobei das Netz 20 der Art des zweiten Teilnehmers 30 und des erfindungsgemäßen Funkgerätes 10 entspricht. Als Beispiel seien in der Folge verschiedene Möglichkeiten für das Netz 20 angegeben. Bei einem Mobiltelefon als Funkgerät 10 und einem zweiten Teilnehmer 30 am ISDN-Netz wird die erste Kommunikationsverbindung 3 vom erfindungsgemäßen Funkgerät 10 aus zunächst über dessen erste Funkschnittstelle 13 zur Basisstation eines Mobilfunknetzes geleitet und von dort über das öffentliche Fernsprechnetz zum zweiten Teilnehmer 30. Das Netz 20 entspricht in diesem Beispiel also der Basisstation und dem öffentlichen Telefonnetz. Falls es sich beim zweiten Teilnehmer 30 um ein Mobilfunkgerät handelt, wird die erste Kommunikationsverbindung 3 nicht über das drahtgebundene Telefonnetz sondern über das Mobilfunknetz des zweiten Teilnehmers 30 geführt. Das Netz 20 entspricht dann dem Mobilfunknetz des Funkgerätes 10 und dem Mobilfunknetz des zweiten Teilnehmers.

In Figur 1 ist weiterhin eine zweite Kommunikationsverbindung 4 dargestellt, die vom erfindungsgemäßen Funkgerät 10 über dessen zweite Funkschnittstelle 14 zu einem dritten Teilnehmer 40 geführt ist. Die zweite Funkschnittstelle 14 ist, insbesondere leistungsmäßig, als eine geringerreichweitige Funkschnittstelle ausgebildet als die erste Funkschnittstelle 13; entsprechend ist die zweite Kommunikationsverbindung 4 erfindungsgemäß insbesondere eine geringerreichweitige Verbindung als die erste Kommunikationsverbindung 3. Über die zweite Funkschnittstelle 14 ist es damit möglich, das erfindungsgemäße Funkgerät 10 im lokalen Umfeld mit einem oder mehreren Kommunikationsteilnehmern zu verbinden. Hierfür steht stellvertretend der dritte Teilnehmer 40. Insbesondere ist es erfindungsgemäß vorgesehen, zwischen dem erfindungsgemäßen Funkgerät 10 und dem dritten Teilnehmer 40 eine Kommunikation gemäß dem Bluetooth-Standard zu betreiben. Die Bezeichnung "Bluetooth-Standard" wird hier auch zur Bezeichnung des Bluetooth-Protokolls verwendet, das als ein drahtloses Übertragungssystem zur Verbindung unterschiedlichster Geräte wie PC, Drucker, Tastatur, Mobiltelefone und dergleichen auf kurzen Distanzen von einigen 10m bis einigen 100m ermöglicht, bekannt ist.

Im Normalfall findet somit ein Telefonat zwischen zwei Kommunikationspartnern statt. Diese sindals das erfindungsgemäße Funkgerät (erster Teilnehmer) 10 und der zweite Teilnehmer 30. Für den Fall, dass ein dritter Gesprächspartner sich in Reichweite der zweiten Funkschnittstelle 14, d.h. beispielsweise im selben Raum oder auch im selben Gebäude, aufhält und dieser an einem Telefonat teilnehmen soll, ist eine Konferenzschaltung über die zweite Funkschnittstelle 14 des erfindungsgemäßen Funkgerätes 10 möglich. Diese Lösung ist erheblich kostengünstiger als beispielsweise eine herkömmliche Konferenzschaltung (beispielsweise gemäß einem Mobilfunkstandard) zwischen dem Funkgerät 10, dem zweiten Teilnehmer 30 und dem dritten Teilnehmer 40, die eine kostenpflichtige Externverbindung sowohl zwischen dem Funkgerät 10 und dem Netz 20 als auch zwischen dem zweitten Teilnehmer 40 und dem Netz 20 erfordern würde. Für den dritten Teilnehmer 40 würden in diesem Fall die normalen Verbindungsentgelte zum Mobilfunkbetreiber anfallen, auch wenn er an der Verbindung lediglich passiv, beispielsweise durch Mithören, teilnehmen würde. Die Erfindung ermöglicht es somit, eine kostenfreie Mithör- und/oder Mitsprechmöglichkeit zwischen wenigstens zwei in Reichweite der zweiten Funkschnittstelle 14 befindlichen Mobilfunkgeräten bereitzustellen.

In Figur 2 ist eine detaillierte Darstellung des erfindungsgemäßen Funkgerätes 10 abgebildet. Das Funkgerät 10 umfasst eine erste Antenne 11, die mit einer ersten Sende-/Empfangseinheit 15 verbunden ist. Die erste Antenne 11 und die erste Sende-/Empfangseinheit 15 bilden zusammen die erste Funkschnittstelle 13. Weiterhin umfasst das Funkgerät 10 eine zweite Antenne 12 und eine zweite Sende-/Empfangseinheit 16. Die zweite Antenne 12 und die zweite Sende-/Empfangseinheit 16 bilden zusammen die zweite Funkschnittstelle 14. Weiterhin umfasst das Funkgerät 10 eine Steuerungseinheit 17, die sowohl mit der ersten Sende-/Empfangseinheit 15 als auch mit der zweiten Sende-/Empfangseinheit 16 verbunden ist. Die Steuerungseinheit 17 steuert den Datenfluß zwischen weiteren nicht dargestellten Komponenten des Funkgerätes 10 und den Funkschnittstellen 13 und 14. Weiterhin steuert die Steuerungseinheit 17 auch den Datenfluß von der ersten Funkschnittstelle 13 zur zweiten Funkschnittstelle 14 und umgekehrt.

Unter der Voraussetzung, dass das erfindungsgemäße Funkgerät 10 die erste Kommunikationsverbindung 3 mit dem zweiten Teilnehmer 30 über seine erste Funkschnittstelle 13 unterhält und eine Verbindung über die zweite Funkschnittstelle 14 zu dem dritten Teilnehmer 40 aufgebaut werden soll, sorgt die Steuerungseinheit 17 dafür, dass die zweite Kommunikationsverbindung 4 zunächst aufgebaut wird und anschließend, dass die über die erste Kommunikationsverbindung 3 übertragenen Daten auch über die zweite Kommunikationsverbindung 4 zum dritten Teilnehmer 40 übertragen werden. Bei der Ankunft von Verbindungsdaten vom dritten Teilnehmer 40 über die zweite Schnittstelle 14, die zur Einspeisung in die erste Kommunikationsverbindung 3 bestimmt sind, wird dies ebenfalls von der Steuerungseinheit 17 erkannt und, beispielsweise durch Mischen der Sprachsignale des dritten Teilnehmers 40 mit den von einem Benutzer des Funkgerätes 10 erzeugten Sprachsignalen, ein Signal generiert, das an die erste Funkschnittstelle 13 zur Übertragung an den zweiten Teilnehmer 30 weitergeleitet wird. Dies ermöglicht es, den dritten Teilnehmer 40 aktiv in die bestehende erste Kommunikationsverbindung einzubinden. Hierdurch wird, beispielsweise bei Sprachdaten, ermöglicht, dass der dritten Teilnehmer 40 sowohl die erste Kommunikationsverbindung 3 hören als auch auf die erste Kommunikationsverbindung 3 sprechen kann.

Bei dem über die zweite Kommunikationsverbindung 4 an das Funkgerät 10 angeschlossenen dritten Teilnehmer 40 muß es sich nicht notwendigerweise ebenfalls um ein Mobilfunkgerät handeln, sondern es kann sich hierbei auch um ein Festnetztelefon, einen Walkman oder um einen Ohrhörer mit Mikrofon (Head-Set) handeln, wobei als Bedingung lediglich gefordert werden muß, dass diese Geräte eine mit der zweiten Funkschnittstelle 14 kompatible Funkschnittstelle aufweisen. Hierbei ist erfindungsgemäß insbesondere der Bluetooth-Standard vorgesehen. Durch die zweite Kommunikationsverbindung 4 wird somit die gleiche Funktionalität wie eine Konferenzschaltung zwischen dem Funkgerät 10, dem zweiten Teilnehmer 30 und dem dritten Teilnehmer 40 bereitgestellt, wobei diese Konferenzschaltung für den dritten Teilnehmer kostenfrei ist. Als dritten Teilnehmer ist erfindungsgemäß auch vorgesehen, eine Mehrzahl von Geräten an die zweite Funkschnittstelle 14 des Funkgerätes 10 anzuschließen.

## Patentansprüche

1. Funkgerät (10) mit einer ersten Funkschnittstelle (13) und mit einer zweiten Funkschnittstelle (14), wobei vom ersten Teilnehmer (10) eine erste Kommunikationsverbindung (3) über die erste Funkschnittstelle (13) mit einem zweiten Teilnehmer (30) aufbaubar ist, **dadurch gekennzeichnet, dass** während des Betriebs der ersten Kommunikationsverbindung (3) über die zweite Funkschnittstelle (14) eine zweite Kommunikationsverbindung (4) mit einem dritten Teilnehmer (40) aufbaubar ist, wobei der dritte Teilnehmer (40)an der ersten Kommunikationsverbindung teilnimmt.

2. Funkgerät (10) nach Anspruch 1, **dadurch gekennzeichnet, dass** die erste Kommunikationsverbindung (3) und die zweite Kommunikationsverbindung (4) zur Übertragung von Sprachdaten dient.

3. Funkgerät (10) nach Anspruch 1, **dadurch gekennzeichnet, dass** die erste Kommunikationsverbindung (3) und die zweite Kommunikationsverbindung (4) der Übertragung von Faxdaten, Bilddaten und/oder Steuerungsdaten dient.

4. Funkgerät (10) nach einem der vorhergehenden Ansprüche, **dadurch gekennzeichnet, daß** die über die erste Funkschnittstelle (13) stattfindende Kommunikation weiterreichweitig ist als die über die zweite Funkschnittstelle (14) stattfindende Kommunikation.

5. Funkgerät (10) nach einem der vorhergehenden Ansprüche, **dadurch gekennzeichnet, daß** die erste Funkschnittstelle (13) der Kommunikation mit einem Mobilfunknetz gemäß einem Standard zur Funkkommunikation dient.

6. Funkgerät (10) nach Anspruch 6, **dadurch gekennzeichnet, dass** die erste Funkschnittstelle (13) der Kommunikation gemäß dem DECT, GSM und/oder UMTS-Standard dient.

7. Funkgerät (10) nach einem der vorhergehenden Ansprüche, **dadurch gekennzeichnet, dass** die zweite Funkschnittstelle (14) der Kommunikation gemäß dem Bluetooth-Standard dient.

8. Funkgerät nach einem der vorhergehenden Ansprüche, **dadurch gekennzeichnet, daß** über die erste Kommunikationsverbindung übertragene Daten sowohl von allen Teilnehmern empfangbar als auch von allen Teilnehmern veränderbar sind.

## Claims

1. Radio device (10) having a first radio interface (13) and having a second radio interface (14), wherein a first communications link (3) can be set up by the first subscriber (10) to a second subscriber (30) via the first radio interface (13), **characterized in that** a second communications link (4) can be set up to a third subscriber (40) while the first communications link (3) is operating via the second interface (14), wherein the third subscriber (40) shares the first communications link.

2. Radio device (10) according to Claim 1, **characterized in that** the first communications link (3) and the second communications link (4) are used to transmit voice data.

3. Radio device (10) according to Claim 1, **characterized in that** the first communications link (3) and the second communications link (4) are used to transmit fax data, image data and/or control data.

4. Radio device (10) according to one of the preceding claims, **characterized in that** the communication which takes place via the first radio interface (13) is more wide ranging than the communication which takes place via the second radio interface (14).

5. Radio device (10) according to one of the preceding claims, **characterized in that** the first radio interface (13) is used to communicate with a mobile radio network according to a standard for radio communication.

6. Radio device (10) according to Claim 6, **characterized in that** the first radio interface (13) is used for communication according to the DECT, GSM and/or UMTS standard.

7. Radio device (10) according to one of the preceding claims, **characterized in that** the second radio interface (14) is used for communication according to the Bluetooth standard.

8. Radio device according to one of the preceding claims, **characterized in that** data which is transmitted via the first communications link can both be received by all the subscribers and changed by all the subscribers.

## Revendications

1. Appareil radio (10) comprenant une première interface radio (13) et une deuxième interface radio (14), dans lequel (10) une première liaison de communication (3) peut être établie par le premier abonné par l'intermédiaire de la première interface radio (13) avec un deuxième abonné (30),
**caractérisé en ce que**
pendant le fonctionnement de la première liaison de communication (3) une deuxième liaison de communication (4) avec un troisième abonné (40) peut être établie par l'intermédiaire de la deuxième interface radio (14), le troisième abonné (40) participant à la première liaison de communication.

2. Appareil radio (10) selon la revendication 1,
**caractérisé en ce que**
la première liaison de communication (3) et la deuxième liaison de communication (4) servent à la transmission de données vocales.

3. Appareil radio (10) selon la revendication 1,
**caractérisé en ce que**
la première liaison de communication (3) et la deuxième liaison de communication (4) servent à la transmission de données faxées, de données d'image et/ou de données de commande.

4. Appareil radio (10) selon l'une quelconque des revendications précédentes,
**caractérisé en ce que**
la communication assurée par l'intermédiaire de la première interface radio (13) présente une portée plus importante que la communication assurée par la deuxième interface radio (14).

5. Appareil radio (10) selon l'une quelconque des revendications précédentes,
**caractérisé en ce que**
la première interface radio (13) sert à la communication avec un réseau de radiocommunication mobile selon un standard de radiocommunication.

6. Appareil radio (10) selon la revendication 5,
**caractérisé en ce que**
la première interface radio (13) sert à la communication selon les standards DECT, GSM et/ou UMTS.

7. Appareil radio (10) selon l'une quelconque des revendications précédentes,
**caractérisé en ce que**
la deuxième interface radio (14) sert à la communication selon le standard Bluetooth.

8. Appareil radio selon l'une quelconque des revendications précédentes,
**caractérisé en ce que**
des données transmises par la première liaison de communication peuvent être aussi bien reçues que modifiées par tous les abonnés.
